# EUROPEAN PATENT APPLICATION

(11) **EP 1 803 979 A2**
(43) Date of publication of application: **04.07.2007**
(21) Application number: 06026444.7
(22) Date of filing: 20.12.2006
(51) Int. Cl.: F16H 61/688

(54) **Automatic transmission controller, automatic transmission control method and automatic transmission**

(30) Priority: 28.12.2005 JP 2005378169
(71) Applicant: HITACHI, LTD., Chiyoda-ku Tokyo 100-8280 (JP)
(72) Inventor: Ozaki, Naoyuki, c/o Hitachi Ltd.,, 1-6-1 Marunouchi Chiyoda Tokyo 100-8220 (JP); Ibamoto, Masahiko, c/o Hitachi Ltd.,, 1-6-1 Marunouchi Chiyoda Tokyo 100-8220 (JP); Kuroiwa, Hiroshi, c/o Hitachi Ltd.,, 1-6-1 Marunouchi Chiyoda Tokyo 100-8220 (JP)
(74) Representative: Beetz & Partner

(57) **Abstract**

At the present invention, a transmission, a vehicle control unit equipped with the transmission, or control method thereof comprising
two input shafts (6 and 15), output shaft (3), two input clutches (5 and 8) that are engaged and disengaged to transmit rotational force from drive source (1) to the two input shafts (6 and 15), multiple gear sets (11 and 20; 17 and 23) which transmit drive force at respective gear ratios between the two input shafts (6 and 15) and output shaft (3), multiple shifting clutches (26 and 27) to select a gear set which transmits the drive force among the multiple gear sets, and friction clutch (32) which transmits drive force between two input shafts (6 and 15).

Thereby, maximum vehicle drivability and riding comfort requested by drivers are provided without any complicated control and adjustment such as a dual friction clutch transmission.

## Description

### FIELD OF THE INVENTION

This invention relates to a vehicle control unit, control method, and automatic transmission.

### BACKGROUND OF THE INVENTION

Generally, a conventional automatic transmission using a planetary gear type or parallel axes type shift mechanism changes gears by selecting, engaging or disengaging a combination of clutches that are individually provided for gear combinations of different gear ratios. Some kinds of planetary gear type well-known as a general automatic transmission shift engine torque from current gear position to next gear position by exchanging friction clutches. This type of transmission is equipped with a torque converter. The torque converter can absorb starting and shifting shocks but is inefficient in shifting and reduces the fuel economy of the vehicle.

To solve this problem, an automated manual transmission (AMT) has been developed by automating a parallel axes type transmission that has been used as a manual transmission (MT). This parallel axes type transmission can minimize clutch slippage by using friction clutches. Moreover, this type provides fewer gears to be engaged and can be efficient in shifting and increase the fuel economy of the vehicle.

However, this type must disengage the friction clutches for shifting. In other words, the drive torque is temporarily interrupted in acceleration and the driver of the vehicle feels shifting shocks. To avoid this unwanted torque interruptions, various transmissions have been disclosed. One of such transmissions (e.g. see Japanese Patent Laid-open No. 2004-251456) connects two friction clutches that can transmit drive force to gear positions to the output shaft of the engine and exchanges the friction clutches for shifting.

### SUMMARY OF THE INVENTION

However, a dual friction clutch transmission of the above example contains various control- and adjustment-related problems. If the clutch exchange cannot be controlled adequately because of a piece-to-piece variation of apparatus, improper transmission temperature, and dispersion of output torque of engine, the good drivability and riding comfort cannot be attained. Moreover, two friction clutches are required to make the transmission high efficient without torque interruption. This increases the production cost and weight of the transmission mechanism.

This invention relates to a device or method of controlling a vehicle that is equipped with an automatic transmission which may comprise
two input shafts, an output shaft, two input clutches that are engaged and disengaged to transmit rotational force from a drive source to the two input shafts, multiple gear sets which transmit drive force at respective gear ratios between the two input shafts and the output shaft, multiple shifting clutches to select a gear set which transmits the drive force among the multiple gear sets, and a friction clutch which transmits force between two input shafts.

This invention can attain the good drivability and riding comfort that vehicle drivers want without using any complicated control and adjustment as in the dual friction clutch transmission.

The above mentioned features may be combined in any way, partly or as a whole.

### BRIEF DESCRIPTION OF THE DRAWINGS

Fig. 1 shows a configuration of a vehicle which is one embodiment of this invention.
Fig. 2 shows the major configuration of actuator group 56 of Fig. 1.
Fig. 3 shows the configuration of transmission 2 of Fig. 1.
Fig. 4 shows how drive force is transmitted when the vehicle starts in Fig. 3.
Fig. 5 shows how drive force is transmitted in the case of a steady-state running on 1st speed in Fig. 3.
Fig. 6 shows how drive force is transmitted during up-shifting in Fig. 3.
Fig. 7 shows how drive force is transmitted during up-shifting in Fig. 3.
Fig. 8 shows how drive force is transmitted during up-shifting in Fig. 3.
Fig. 9 shows an operational timing diagram of Fig. 4 to Fig. 8.
Fig. 10 shows how drive force is transmitted when the vehicle performs down-shifting in Fig. 3.
Fig. 11 shows how drive force is transmitted when the vehicle performs down-shifting in Fig. 3.
Fig. 12 shows how drive force is transmitted when the vehicle performs down-shifting in Fig. 3.
Fig. 13 shows how drive force is transmitted when the vehicle performs down-shifting in Fig. 3.
Fig. 14 shows an operational timing diagram of Fig. 10 to Fig. 13.
Fig. 15 shows an example of configuration of controller 31 and engine controller 33 of Fig. 1.
Fig. 16 shows a control flow chart of controller 31.
Fig. 17 shows a configuration of transmission 2 which is a second embodiment of this invention.
Fig. 18 shows a sectional view of the input shaft of Fig. 17 as an example.
Fig. 19 shows a sectional view of transmission 2 which is a third embodiment of this invention.
Fig. 20 shows a sectional view of transmission 2 which is a fourth embodiment of this invention.
Fig. 21 shows a sectional view of transmission 2 which is a fifth embodiment of this invention.

### DESCRIPTION OF THE PREFERRED EMBODIMENTS

This invention proposes an automatic transmission; a unit and method of controlling thereof that can avoid torque interruptions during shifting without using any complicated control by providing at least one friction or electromagnetic clutch instead of the above dual friction clutches among multiple input shafts. A single friction clutch provided among multiple input shafts can continuously transmit torque to the driving wheels. In more concrete terms, one friction or electromagnetic clutch is provided between two transmission input shafts which are the outputs of two input clutches provided on the output shaft of the engine. This friction clutch absorbs the rotational speed difference that generates between the multiple input shafts in shifting and enables steady force transmission to the output shaft during shifting. Below will be explained some embodiments of this invention.

### [Embodiment 1]

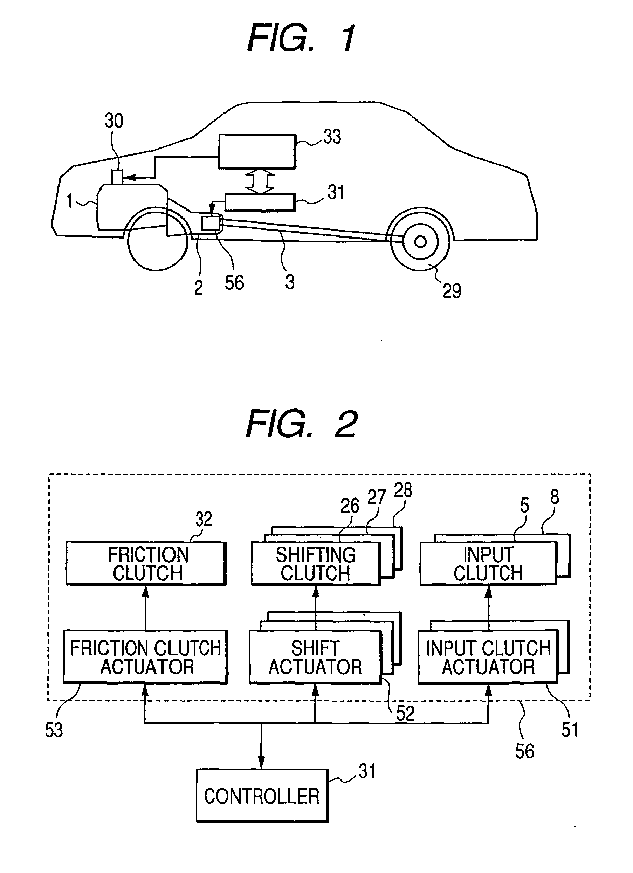

Fig. 1 shows a configuration of a vehicle that is one embodiment of this invention.

Transmission 2 is connected to prime mover 1 which gives driving force to a vehicle. Its output shaft 3 drives wheels 29 via a differential gear. Transmission 2 houses actuator group 56 to accomplish starting and shifting. Controller 31 is connected to actuator group 56. Controller 31 instructs input clutch actuator 51, friction clutch actuator 53, and shift actuator 52 to actuate clutches and the shift mechanism to accomplish starting and shifting.

Electronic controlled throttle valve 30 is provided on engine 1 to control the output of the engine by a request signal sent from engine controller 33. It is also possible to control the engine output by changing ignition timing and fuel injection rate instead of the throttle valve.

Controller 31 controls transmission torque and revolutions of actuator group 56 and temporarily controls the output of engine 1 by transferring information to and from engine controller 33.

In the above example, engine controller 33 and controller 31 are separate, but one of these controllers can contain the function of the other or a single integrated controller can contain all functions of these controllers. In other word, if one of the controllers of this invention contains functions of the other controller, not all controllers are always required. This applies to the other embodiments of this invention.

Further, this embodiment uses a rear-wheel-drive vehicle as an example, but can apply to a front-wheel-drive vehicle by placing engine 1, transmission 2, and output shaft perpendicular to the movement of the vehicle. Furthermore, this embodiment can apply to a four-wheel-drive vehicle by dividing the output shaft to both front and rear wheels.

Fig. 2 shows the major configuration of actuator group 56 of Fig. 1.

When receiving a command from controller 31, actuator group 56 operates two input clutches (first mesh type clutch 5 and second mesh type clutch 6), three shifting clutches (first shifting mesh type clutch 26, second shifting mesh type clutch 27, and third shifting mesh type clutch 28), and one friction clutch 32 and sends the operating states of these clutches to controller 31. Although this example uses three shifting clutches, the number of shifting clutches is not limited to three. It can be any.

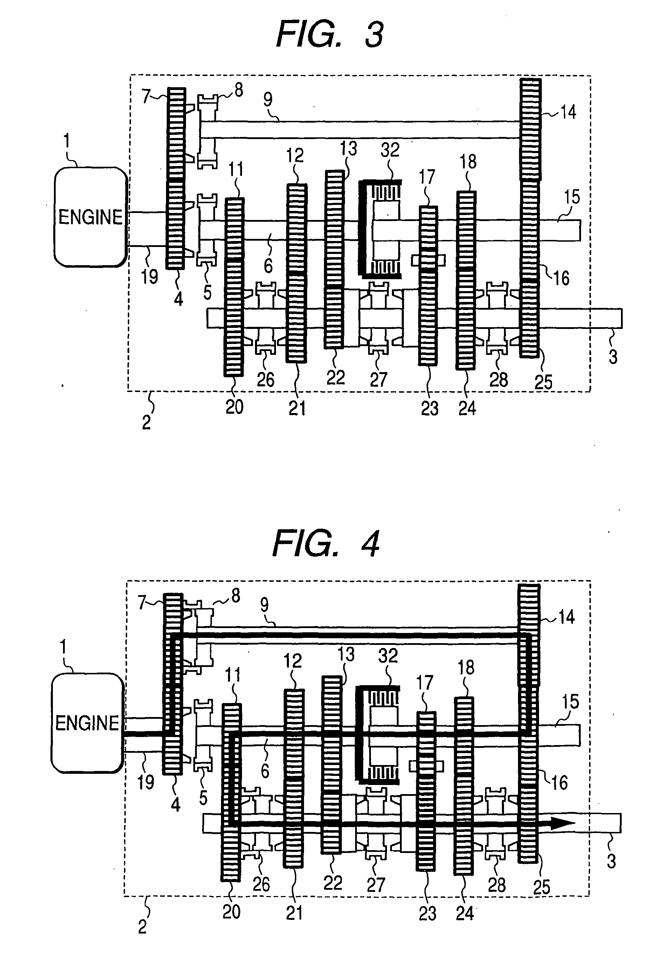

Fig. 3 shows the configuration of transmission 2 of Fig. 1.

The output of engine 1 that is a drive source is connected to the main input shaft 19 of the transmission. First input gear 4 is fixed to the main input shaft 19 of the transmission. First input mesh type clutch 5 can selectively transmit force to first input shaft 6. When engaged with second input gear 7, first input gear 4 can selectively transmit force to third shaft 9 via second input mesh type clutch 8.

First input shaft 6 fixes 1st drive gear 11, 3rd drive gear 12, 5th drive gear 13, and one of friction clutches 32 thereon.

Third shaft 9 fixes second output gear 14. Second input shaft 15 is driven by engagement of second output gear 14 and 4th drive gear 16. Second input shaft 15 fixes 2nd drive gear 18, reverse drive gear 17, and the other of friction clutches 32 thereon.

The above drive gears are respectively engaged with 1st driven gear 20, 3rd driven gear 21, 5th driven gear 22, reverse driven gear 23, 2nd driven gear 24 and 4th driven gear 25. 1st shifting mesh type clutch 26, 2nd shifting mesh type clutch 27, and 3rd shifting mesh type clutch 28 selectively transmit drive force to output shaft 3.

Although this embodiment provides shifting mesh type clutches on the output shaft, they can be provided on an input shaft if the maximum engine output allows. In the description below, a combination of a drive gear (e.g. 1st drive gear 11) and a driven gear (e.g. 1st driven gear 20) is called a gear set. Although second input shaft 15 is driven by engagement of second output gear 14 and 4th drive gear 16 in this embodiment, gear 14 can be engaged any gear as long as the gear can drive second input shaft 15. The gear ratio of first gear 4 and second gear and the gear ratio of gears that drive the second input shaft must be 1 respectively in this configuration.

By a command from controller 31, the actuator (not shown in Fig. 3) actuates first input mesh type clutch 5, second mesh type clutch 8, first shifting mesh type clutch 26, second shifting mesh type clutch 27, third shifting mesh type clutch 28, and friction clutch 32 to transmit or disconnect drive force. Although this embodiment handles a transmission configuration of 5 speeds forward gear and 1 speeds reverse gear, this invention does not limit the number of gear positions as long as gear positions are not continuous on one input shaft.

Fig. 4 shows how drive force is transmitted when the vehicle starts in Fig. 3.

In the vehicle stop state, second mesh type clutch 8 is engaged. (If the clutch has been disengaged, the clutch is engaged. If the clutch has been engaged, the clutch is kept engaged. This applies to the description below.) First shifting mesh type clutch 26 shifted to the 1st speed side to engage and the other shifting mesh type clutches are disengaged. Then, disengaged friction clutch 32 is gradually engaged. With this, the vehicle can start smoothly. When friction clutch 32 is completely engaged, first input gear 4 and first input shaft 6 rotate at the same speed and first input mesh type clutch 5 is ready to be engaged. Here, the clutch 5 is shifted to engage. In some cases (e.g. for special clutch tooth shapes), clutch engagement may be hard. This problem can be solved by engaging first input mesh type clutch 5 just before friction clutch 32 is engaged completely and just before the rotational speed of first input mesh type clutch 5 is completely equal to the rotational speed of first input gear 4 (that is, when the input and output rotational speeds of first input mesh type clutch 5 are synchronized).

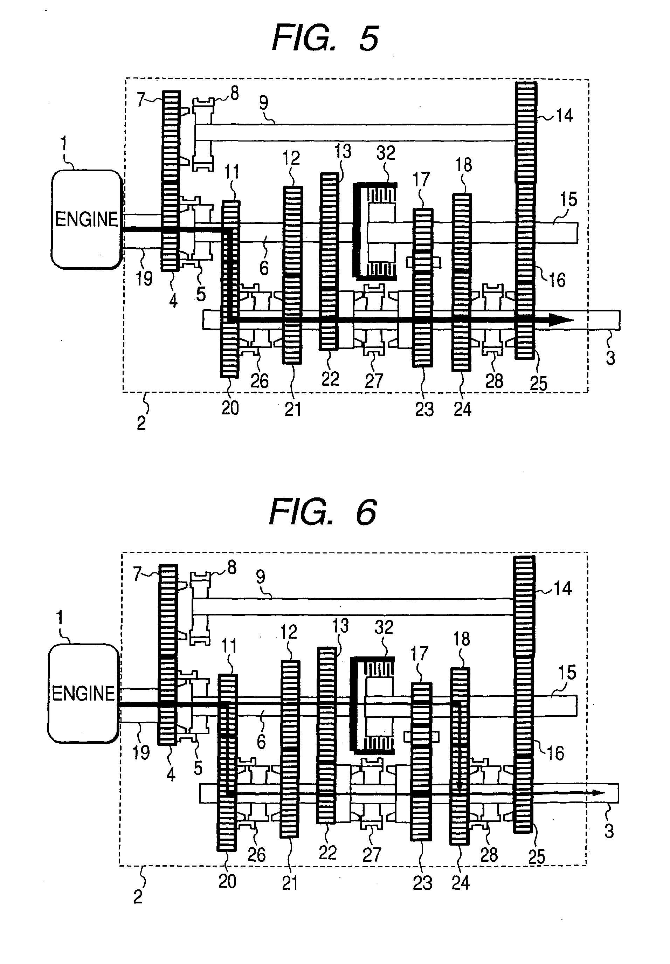

Fig. 5 shows how drive force is transmitted when the vehicle is a steady-state running on 1st speed in Fig. 3.

In the start shift controlling of Fig. 4, second input gear 7 and second input mesh type clutch 8 also have the same rotational speed. In this state, second input mesh type clutch 8 is disengaged. At or after this timing, friction clutch 32 that has ended force transfer is disengaged. Fig. 5 shows gear combinations for this steady-state running on 1st speed. It is possible to run the vehicle steadily only by disengaging friction clutch 32 without disengaging second input mesh type clutch 8. Judging from less fuel economy due to dragging of friction clutch 32 and the inertia of third shaft 9 in spite of higher shifting response, it is preferable to disengage third shaft 9 for higher transmission efficiency. It is also preferable to disengage only second input mesh type clutch 8 without disengaging friction clutch 32. Requirement of response or fuel economy is considered to select third shaft 9 or clutch 8 to be disengaged.

Fig. 6 to Fig. 8 show how drive force is transmitted during up-shifting in Fig. 3.

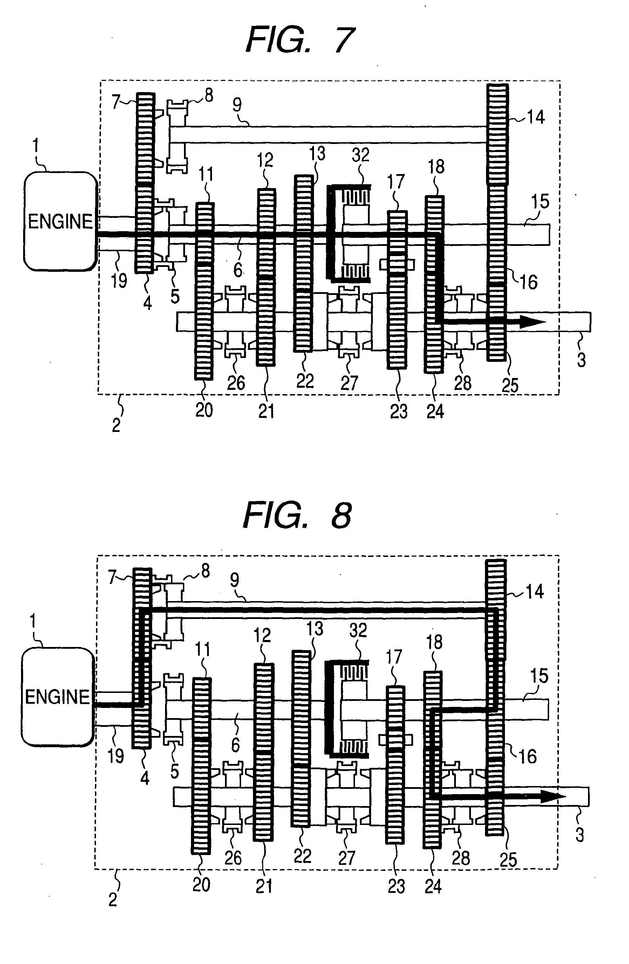

The description below uses an example of up-shifting from the 1st speed to the 2nd speed. Third shifting mesh type clutch 28 is shifted to the 2nd speed position from the 1st speed position (Fig. 5). Then friction clutch 32 is gradually shifted to engage. As shown in Fig. 6, the 2nd-speed drive force gradually starts to advance via 2nd drive gear 18 and 2nd driven gear 24. As shown in Fig. 7, the torque via 1st drive gear 20 becomes very small (approx. 0 which is a preset torque). In this state, first shifting mesh type clutch 26 can be easily disengaged from the 1st-speed gear. When friction clutch 32 is further shifted to engage from this state, the rotational speed of first input gear 4 gradually becomes equal to the rotational speed of third shaft 9 (where the input and output rotational speeds of second input mesh type clutch 8 are synchronized). Finally, second input mesh type clutch 8 is engaged and first input mesh type clutch 5 is disengaged. Then, friction clutch 32 is disengaged. In this case also, an engagement failure due to collision of gear teeth can be avoided by engaging second input mesh type clutch 8 just before the rotational speed of first input gear 4 becomes completely equal to the rotational speed of the third shaft. Fig. 8 shows a flow of a drive force when friction clutch 32 is disengaged, namely in the 2nd speed running state.

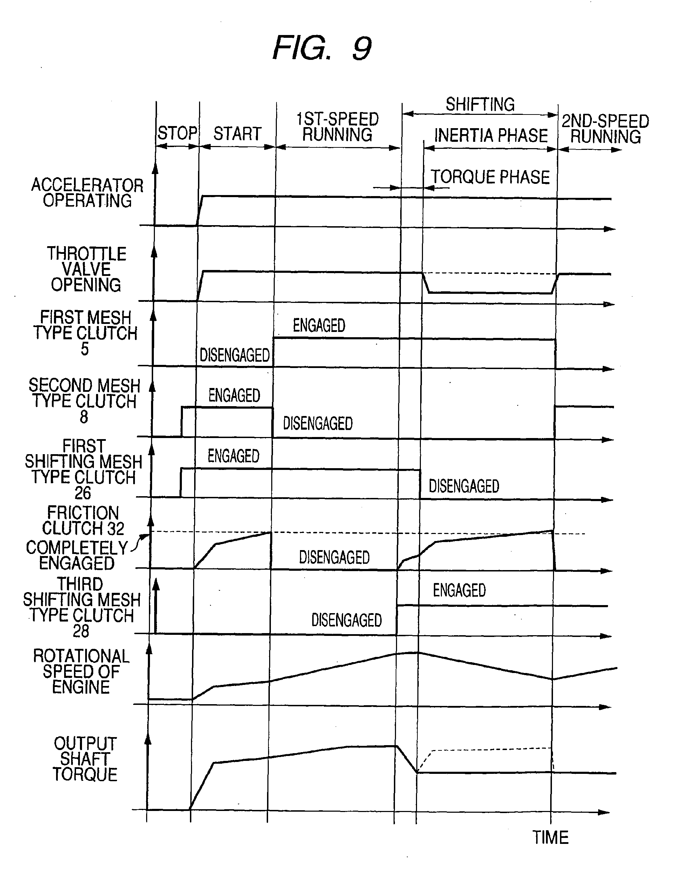

Fig. 9 shows an operational timing diagram of Fig. 4 to Fig. 8.

This diagram shows clutch and torque states while a vehicle starts to run, runs at the 1st speed, changes speed from 1st speed to 2nd speed, and runs at the 2nd speed. Note the behavior of the output shaft torque. The output shaft torque is not interrupted during shifting because there is a drive force transmission path even during shifting. However, the operation of the friction clutch only is not enough, causing a projection of the output shaft torque as indicated by a dotted line. The output shaft torque can have a smooth transition as indicated by a solid line by reducing the throttle valve opening independently of the accelerator operating. Although the engine torque is controlled by the throttle valve opening in this diagram, the other method such as control of ignition timing and fuel supply can be used to reduce the engine torque. As above described, this embodiment can perform smooth shifting while transmission of the output shaft torque is in progress. Although this embodiment describes up-shifting from the 1st speed position to the 2nd-speed position, a similar method can be applied to perform smooth shifting without interruption of the output shaft torque for all up-shifting operations using multiple input shafts.

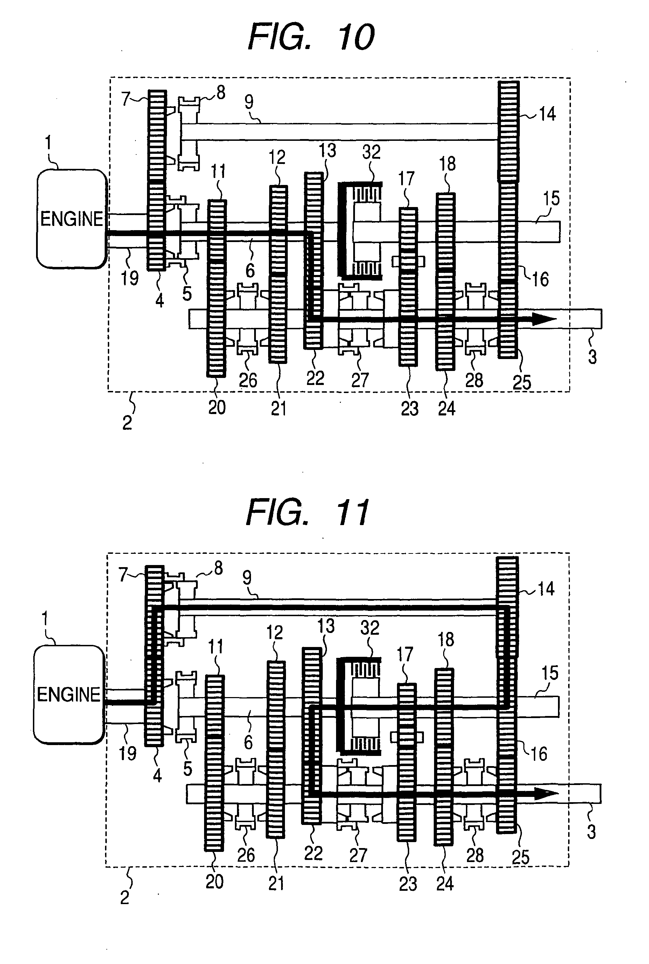

Fig. 10 to Fig. 13 show how drive force is transmitted when the vehicle performs down-shifting in Fig. 3.

Below will be explained operation to shift down from the 5th-speed position to the 4th-speed position. Fig. 10 shows a flow of drive force in the case of a steady-state running on 5th speed. Fig. 11 shows a flow of drive force immediately after shifting starts. As friction clutch 32 is gradually shifted from the state of Fig. 10 to engage, the rotational speed of second input mesh type clutch 8 becomes equal to the rotational speed of second input gear 7 and second input mesh type clutch 8 is ready to be engaged. In some cases (e.g. for special clutch tooth shapes), clutch engagement may be hard. This problem can be solved by engaging second input mesh type clutch 8 just before friction clutch 32 is engaged completely and just before the rotational speed of second input mesh type clutch 8 is completely equal to the rotational speed of second input gear 7 (that is, when the input and output rotational speeds of second input mesh type clutch 8 are synchronized). At this time, first input mesh type clutch 5 is disengaged.

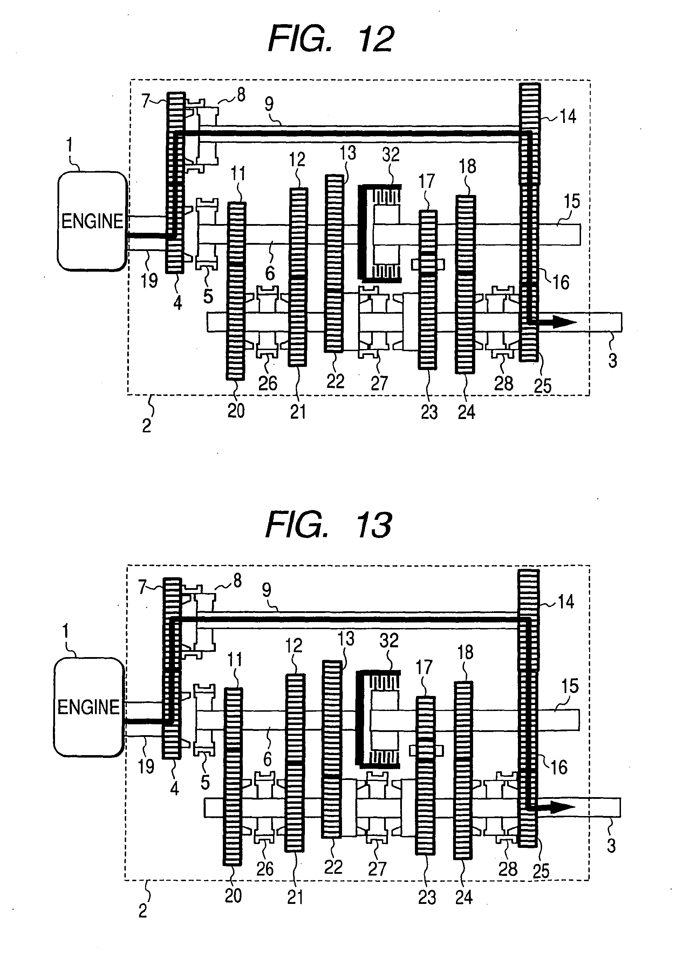

When friction clutch 32 is gradually shifted to disengage from the state of Fig. 11, the engine torque to drive the vehicle is reduced and the engine rotation increases gradually. Simultaneously, the rotational speed of 4th driven gear 25 comes closer to the rotational speed of output shaft 3. When the rotational speeds become equal or the difference of the rotational speeds goes under a preset value (when the speeds are synchronized), 4th driven gear 25 is disengaged from third shifting mesh type clutch 28 (see Fig. 12). In this case also, an engagement failure due to collision of gear teeth can be avoided by engaging third shifting mesh type clutch 28 just before the rotational speed of 4th driven gear 25 becomes completely equal to the rotational speed of third shifting mesh type clutch 28.

In this state, the drive force is transmitted via 4th driven gear 25. Second shifting mesh type clutch 27 is disengaged from 5th driven gear 22 and/or friction clutch 32 is disengaged. This sets the steady-state running on 4th speed (see Fig. 13). After this, first input mesh type clutch 5 is engaged to be ready for next shifting. This improves the shifting response. Judging from less fuel economy due to dragging of friction clutch 32 and the inertia of first input shaft 6, first input mesh type clutch 5 is left disengaged. Requirement of response or fuel economy is considered to determine which clutch is to be disengaged.

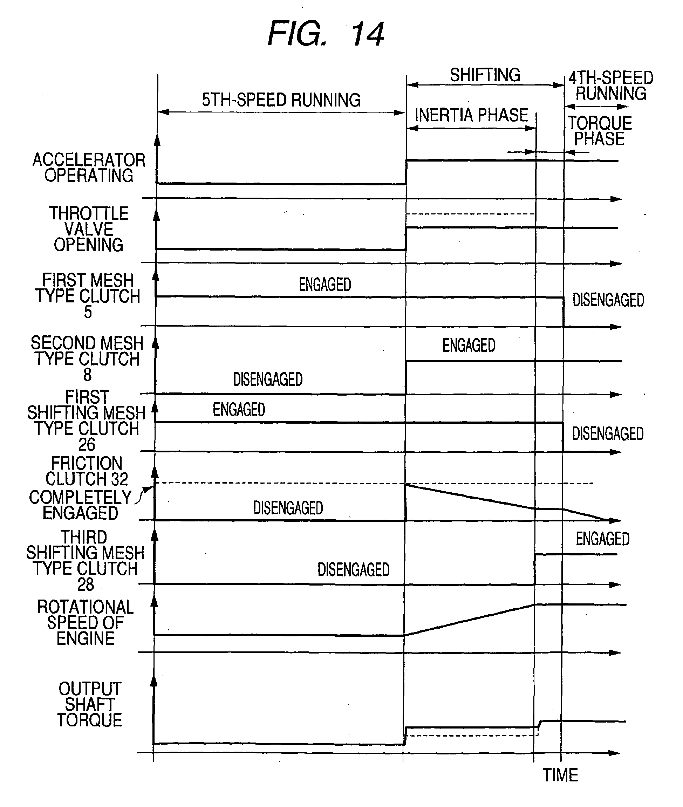

Fig. 14 shows an operational timing diagram of Fig. 10 to Fig. 13.

This diagram shows clutch and torque states while a vehicle runs at the 5th speed, changes speed from 5th speed to 4th speed, and runs at the 4th speed. Note the behavior of the output shaft torque. The output shaft torque is not interrupted during shifting because there is a drive force transmission path even during shifting. However, when the operation of the friction clutch only is not enough to generate the output shaft torque as indicated by a dotted line, it is possible to accelerate increase of the torque as indicated by a solid line by increasing the throttle valve opening independently of the accelerator operating and thus increasing the engine torque. As above described, this embodiment can perform smooth shifting while transmission of the output shaft torque is in progress. A similar method can be applied to perform smooth shifting without interruption of the output shaft torque for all down-shifting operations using multiple input shafts.

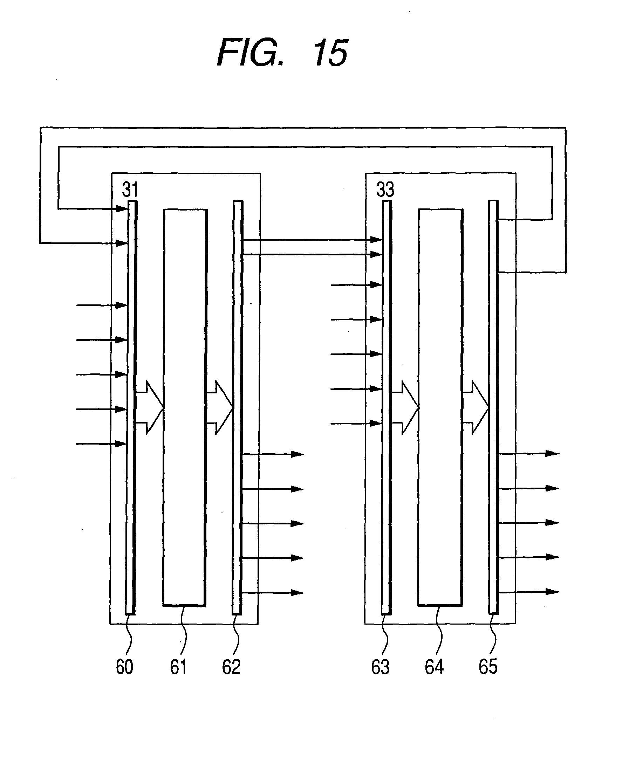

Fig. 15 shows an example of configuration of controller 31 and engine controller 33 of Fig. 1.

Controller 31 is built up as a control unit which is equipped with input section 60, output section 62, and arithmetic processing unit 61. Similarly, engine controller 33 is built up as a control unit which is equipped with input section 63, output section 65, and computer 64.

Each of these controllers inputs multiple vehicle status detection signals and outputs multiple actuator operation signals according to a control method which has been stored in the arithmetic processing unit.

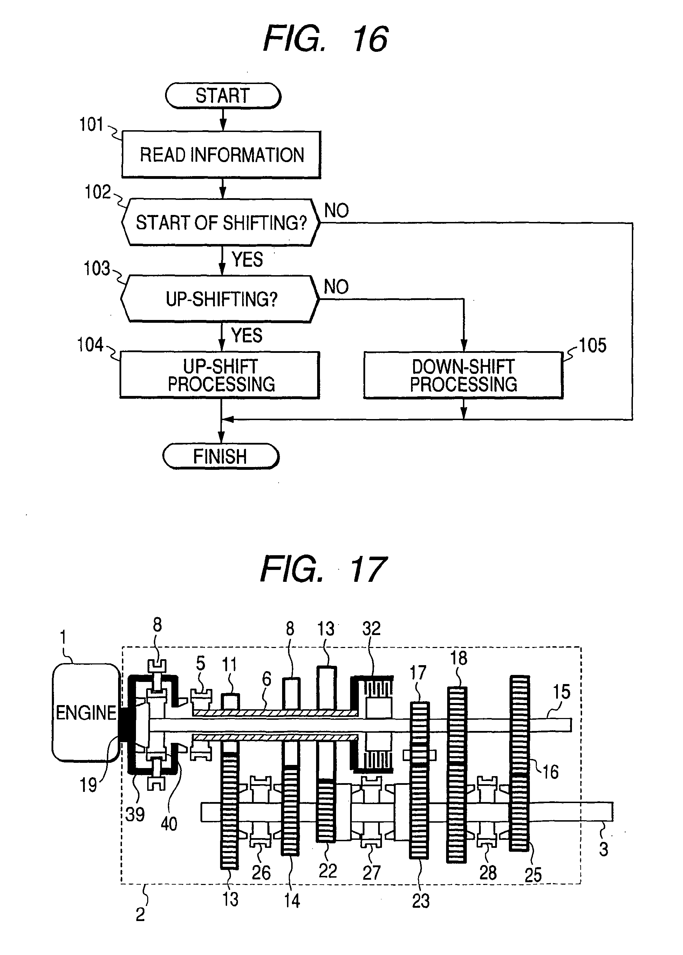

Fig. 16 shows a control flow chart of controller 31.

Controller 31 reads information at Step 101 and judges whether shifting has started at Step 102. In judgment of whether shifting has started, controller 31 determines a gear position from velocity data and accelerator operating which are in the read information. When this determined gear position is not equal to the current gear position, shifting starts and control is transferred to Step 103. If the determined gear position is equal to the current gear position, shifting is suppressed and controller 31 stops processing.

When starting shifting, controller 31 judges whether the shifting is up-shifting or down-shifting at Step 103. In up-shifting, controller 31 implements the above up-shifting operation at Step 104. In down-shifting, controller 31 implements the above down-shifting operation at Step 105.

### [Embodiment 2]

Fig. 17 shows a configuration of transmission 2 which is a second embodiment of this invention.

The second embodiment is the same as the first embodiment but in the second embodiment, first input shaft 6 is hollow to concentrically contain second input shaft 15. The drive force from the engine is to the input shafts by second input mesh type clutch 8. The operation of this transmission is the same as that of the first embodiment, but the transmission of the second embodiment is smaller thanks to the hollow two-axis shaft configuration.

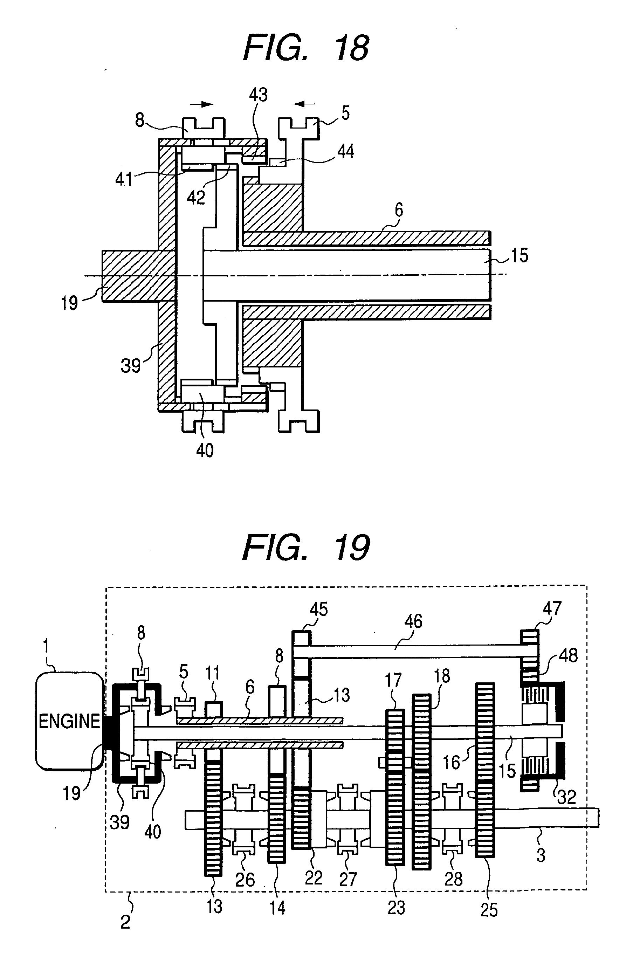

Fig. 18 shows a sectional view of the input shaft of Fig. 17 as an example.

The output from the engine is transmitted to sleeve gear 41 of second input mesh type clutch 8 through main transmission input shaft 19 and rotor 39. Sleeve gear 41 can be selectively engaged with mesh type gear 42 of second input shaft 15. First input mesh type clutch 5 on first input shaft 6 is so constructed to slide on first input shaft. Further, sleeve gear 42 is constructed so as to be selectively engaged with mesh type gear 43 of rotor 39 to transmit the output of the engine to first input shaft 6. In other words, the first and second mesh type clutches are constructed to form a twin-clutch configuration.

### [Embodiment 3]

Fig. 19 shows a sectional view of transmission 2 which is a third embodiment of this invention.

In some cases, friction clutch 32 is hard to be operated if it is in the center of the transmission. In such a case, friction clutch 32 must be placed in the end of the transmission. In this embodiment, one part of friction clutch 32 is provided on the end of second input shaft 15. Drive force from the engine is transmitted to first input shaft 6 through the other part of friction clutch 32, gear 48, gear 47, third shaft 46, gear 45, and gear 13.

### [Embodiment 4]

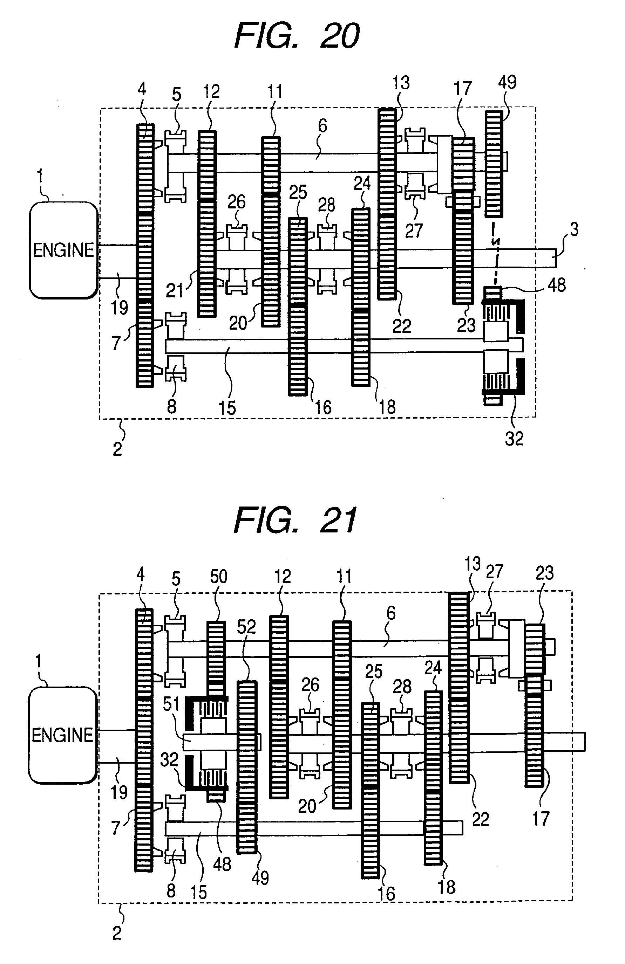

Fig. 20 shows a sectional view of transmission 2 which is a fourth embodiment of this invention.

This embodiment like Embodiment 3 provides friction clutch 32 on one end of transmission, but output shaft 3 is provided between first input shaft 6 and second input shaft 15 or in the center (of the transmission). One part of friction clutch 32 is provided on second input shaft of friction clutch 32 and the other part of friction clutch 32 is connected to the first input shaft with a gear set of gears 48 and 49. This configuration does not use a hollow two-axis shaft structure, but is still compact and more simplified than the configuration of Fig. 19.

### [Embodiment 5]

Fig. 21 shows a sectional view of transmission 2 which is a fifth embodiment of this invention.

This embodiment provides friction clutch 32 in the transmission of Fig. 20 closer to the engine. One part of friction clutch 32 is connected to second input shaft 15 with third shaft 51, gear 52, and gear 49. The other part of friction clutch 32 is connected to first input shaft 6 with gears 48 and 50. This embodiment is very effective when pipes to lubricate the friction clutch and actuator positions are very limited.

As described above, an embodiment of this invention is a transmission which comprises
multiple drive-line selective mechanisms which are connected to a drive source,
multiple input shafts which are selectively engaged to transmit drive force or disengaged by the drive-line selective mechanisms,
output shaft to output drive force, and
one or more gear sets of a drive gear mounted on the input shaft and a driven gear which is engaged with the drive gear so that the gear may be selectively engaged to the output shaft or disengaged from the output shaft, or
one or more gear sets of a drive gear mounted on the output shaft and a driven gear which is engaged with the drive gear so that the gear may be selectively engaged to the input shaft or disengaged from the input shaft ; wherein the transmission is equipped with a means that can continuously change the quantity of drive force transmitted between the input shafts.

The embodiment can use friction clutches as the drive-line selective mechanisms, mesh type clutches or synchronous mesh type clutches as the drive-line selective mechanisms, and a friction clutch or electromagnetic clutch as the means that can continuously change the quantity of drive force.

The transmission can be so constructed
that gear sets provided on a single input shaft may not form consecutive gear positions,
that a third shaft may be provided to receive drive force from at least one of the input shafts, and
that there may be no difference between rotational speeds of the input shafts when a means that can continuously change the quantity of drive force is engaged.

Further, the transmission of this invention enables construction of input shafts of the concentric hollow two-axis shaft type, provision of a means that can continuously change the quantity of drive force transmitted on the third shaft, and connection of the means with the input shaft by mean of gear sets.

An embodiment of this invention is an automatic transmission, a transmission controller, or a transmission controlling method, wherein
when one of multiple drive-line selective mechanisms connected to a drive source is engaged and drive force is transmitted to the output shaft via some gear sets, another drive-line selective mechanism is engaged; and when a gear set which is provided on an input shaft connected to the other drive-line selective mechanism and different from the above gear set is selected and then the means capable of continuously changing the quantity of drive force is operated to increase the transmission torque, the drive force path is changed from the current gear set that transmits the drive force to a gear set of the higher speed position; and when the transmission torque of the current gear set is about 0, the current gear set is deselected and the gear set of the higher speed position is selected to transmit the drive force to the output shaft.

It is preferable to control the output of the drive source when the means capable of continuously changing the quantity of drive force is operated to increase the transmission torque so that the output shaft torque may be equal to an output shaft torque which is made when a gear set of a higher speed position is selected.

Further, it is preferable to gradually restrain the means capable of continuously changing the quantity of drive force from transmitting the torque after the gear set of the higher speed position starts to transmit the torque.

Further, it is preferable to operate the means capable of continuously changing the quantity of drive force to increase the transmission torque before the other drive-line selective mechanism is engaged when the drive-line selective mechanism is built up with mesh type or synchronous clutches.

Furthermore, when one of multiple drive-line selective mechanisms connected to a drive source is engaged and drive force is transmitted to the output shaft via some gear sets, it is preferable to control the means capable of continuously changing the quantity of drive force to gradually decrease the transmission torque, to let the rotational speed of the drive source increase, to engage the drive-line selective mechanism which is connected to a gear set of the low-speed position when the rotational speed of the drive source reaches the selected rotational speed made by a gear set of the low-speed position, and to select the gear set of the low-speed position to drive.

An embodiment of this invention is an automatic transmission, a transmission controller, or a transmission controlling method in accordance with claim 15, wherein the means capable of continuously changing the quantity of drive force is gradually disabled to transmit torque after only the gear set of the low-speed position is selected to drive.

It is preferable to control so that the output of the drive source may be equal to the output shaft torque that is made by a gear set of the low-speed position when the transmission torque of the means capable of continuously changing the quantity of drive force is gradually decreased.

Furthermore, in the case that multiple drive-line selective mechanisms connected to a drive source are made up of mesh type or synchronous clutches, it is preferable to gradually shift the means capable of continuously changing the quantity of drive force so that the transmission torque may be reduced when one of the drive-line selective mechanisms is engaged and the drive force is transmitted to the output shaft via any gear set, to increase the rotational speed of the drive source, to engage the drive-line selective mechanism connected to a gear set of the lower-speed position, select and drive the gear set of the lower-speed position when the rotational speed of the drive source reaches the rotational speed which is made when the gear set of the lower-speed position is selected to drive.

Further, it is preferable to select a gear set of a lower-speed position, half-engage the means capable of continuously changing the quantity of drive force, and start to drive the vehicle.

Further, it is preferable to select a gear set of the lowest speed position, half-engage a drive-line selective mechanism, and start to drive the vehicle when the means capable of continuously changing the quantity of drive force is disabled.

In accordance with the above embodiments, this invention can provide a vehicle transmission which controls the engine, friction clutches and mesh type clutch clutches in cooperation to improve the fuel economy and reduce shifting shocks.

The above mentioned features and embodiments can be combined in any way, partly or as a whole.

## Claims

1. A vehicle control unit comprising
two input shafts (6, 15), an output shaft (3), two input clutches (5, 8) that are engaged and disengaged to transmit rotational force from a drive source (1) to the two input shafts (6, 15), multiple gear sets (11, 20; 17, 23) which transmit drive force at respective gear ratios between the two input shafts (6, 15) and the output shaft (3), multiple shifting clutches (26, 27) to select a gear set which transmits the drive force among the multiple gear sets (11, 20; 17, 23), and a friction clutch (32) which transmits force between two input shafts (6, 15); wherein
the control unit (31) controls the two input clutches (5, 8), multiple shifting clutches (26, 27), and the friction clutch (32).

2. The vehicle control unit of claim 1, wherein
when a vehicle starts, the control unit (31) controls to disengage the input clutch (5, 8) of the first input shaft (6) which is equipped with a starting gear set at a starting shift position, engage the input clutch (15) of the second input shaft (15) which is not the first input shaft (6), engage the shifting clutch of the starting gear set, disengage the other shifting clutch, and gradually engage the disengaged friction clutch (32).

3. The vehicle control unit according to claim 1 or 2, wherein
the control unit (31) controls to engage the input clutch (5, 8) when the input and output rotational speeds of the input clutch (5, 8) of the second input shaft (15) are synchronized.

4. The vehicle control unit according to at least one of claims 1-3, wherein
the control unit (31) controls to disengage at least one of the input clutch (5, 8) of the second input shaft (15) or the friction clutch (32) when engaging the input clutch (5, 8) of the first input clutch (6).

5. The vehicle control unit according to at least one of claims 1-4, wherein
in up-shifting, the control unit (31) engages the shifting clutch of the post-shifting gear set of the second input shaft (15) which is not the first input shaft (6) equipped with a pre-shifting gear set, gradually engages the friction clutch (32), disengages the input clutch (5, 8) of the first input shaft (6) when the transmission torque of the pre-shifting gear set becomes smaller than a preset torque, engages the friction clutch (32), engages the input clutch (5, 8) of the second input shaft (15) when the input and output rotational speeds of the input clutch (5, 8) of the second input shaft (15) are synchronized, and disengage the friction clutch (32).

6. The vehicle control unit according to at least one of claims 1-5, wherein
in down-shifting, the control unit (31) gradually engages the friction clutch (32), engages the input clutch (5, 8) of the second input shaft (15) when the input and output rotational speeds of the input clutch (5, 8) of the second input shaft (15) (which is not the first input shaft (6) having a pre-shifting gear set) are synchronized, disengages the input clutch (5, 8) of the first input shaft (6), gradually disengages the friction clutch (32), engages the shifting clutch of the post-shifting gear set when the input and output rotational speeds of the input clutch (5, 8) of the second input shaft (15) are synchronized, and disengages the shifting clutch of the pre-shifting gear set and/or the friction clutch (32).

7. A method of controlling a vehicle unit equipped with two input shafts (6, 15), an output shaft (3), two input clutches (5, 8) that are engaged and disengaged to transmit rotational force from a drive source to the two input shafts (6, 15), multiple gear sets (11, 20; 17, 23) which transmit drive force at respective gear ratios between the two input shafts (6, 15) and the output shaft (3), multiple shifting clutches (26, 27) to select a gear set which transmits the drive force among the multiple gear sets (11, 20; 17, 23), and a friction clutch (32) which transmits force between two input shafts (6, 15); wherein
the method comprises the steps of disengaging the input clutch (5, 8) of the first input shaft (6) equipped with a start gear set which forms a starting gear position, engaging the input clutch (5, 8) of the second input shaft (15) which is not the first input shaft (6), engaging the shifting clutch of the starting gear set, disengaging the other shifting clutch, and gradually engaging the disengaged clutch.

8. The vehicle controlling method of claim 7, wherein
the input clutch (5, 8) is engaged when the input and output rotational speeds of the input clutch (5, 8) of the first input shaft (6) are synchronized.

9. The vehicle controlling method according to claim 7 or 8, wherein
at least one of the input clutch (5, 8) of the second input shaft (15) or the friction clutch (32) is disengaged when the input clutch (5, 8) of the first input shaft (6) is engaged.

10. A method of controlling a vehicle unit equipped with two input shafts (6, 15), an output shaft (3), two input clutches (5, 8) that are engaged and disengaged to transmit rotational force from a drive source to the two input shafts (6, 15), multiple gear sets (11, 20; 17, 23) which transmit drive force at respective gear ratios between the two input shafts (6, 15) and the output shaft (3), multiple shifting clutches (26, 27) to select a gear set which transmits the drive force among the multiple gear sets (11, 20; 17, 23), and a friction clutch (32) which transmits force between two input shafts (6, 15); wherein
in up-shifting, the method comprises the steps of engaging the shifting clutch of the post-shifting gear set of the second input shaft (15) which is not the first input shaft (6) that is equipped with the pre-shifting gear set, gradually engaging the friction clutch (32), disengaging the input clutch (5, 8) of the first input shaft (6) when the transmission torque of the pre-shifting gear set becomes smaller than a preset torque, engaging the friction clutch (32), engaging the input clutch (5, 8) of the second input shaft (15) when the input and output rotational speeds of the input clutch (5, 8) of the second input shaft (15) are synchronized, and disengaging the friction clutch (32).

11. A method of controlling a vehicle unit equipped with two input shafts (6, 15), an output shaft (3), two input clutches (5, 8) that are engaged and disengaged to transmit rotational force from a drive source to the two input shafts (6, 15), multiple gear sets (11, 20; 17, 23) which transmit drive force at respective gear ratios between the two input shafts (6, 15) and the output shaft (3), multiple shifting clutches (26, 27) to select a gear set which transmits the drive force among the multiple gear sets (11, 20; 17, 23), and a friction clutch (32) which transmits force between two input shafts (6, 15); wherein
in down-shifting, the method comprises the steps of gradually engaging the friction clutch (32), engaging the input clutch (5, 8) of the second input shaft (15) when the input and output rotational speeds of the input clutch of the second input shaft (15) (which is not the first input shaft (6) having a pre-shifting gear set) are synchronized, disengaging the input clutch (5, 8) of the first input shaft (6), gradually disengaging the friction clutch (32), engaging the shifting clutch of the post-shifting gear set when the input and output rotational speeds of the input clutch (5, 8) of the second input shaft (16) are synchronized, and disengaging the shifting clutch of the pre-shifting gear set and/or the friction clutch (32).

12. An automatic transmission comprising two input shafts (6, 15), an output shaft (3), two input clutches (5, 8) that are engaged and disengaged to transmit rotational force from a drive source to the two input shafts (6, 15), multiple gear sets (11, 20; 17, 23) which transmit drive force at respective gear ratios between the two input shafts (6, 15) and the output shaft (3), multiple shifting clutches (26, 27) to select a gear set which transmits the drive force among the multiple gear sets (11, 20; 17, 23), and a friction clutch (32) which transmits force between two input shafts (6, 15).

13. The automatic transmission of claim 12, wherein
the first input shaft (6) which is one of the two input shafts (6, 15) is made hollow and the second input shaft (15) is concentrically provided in a hollow shaft so that said two input clutches (5, 8) comprise a twin clutch structure with two mesh clutches.

14. The automatic transmission according to claim 12 or 13, wherein
the friction clutch (32) is provided on one end of one of the two input shafts (6, 15) and drive force is transmitted by the other input shaft (6, 15) and a third shaft (9).

15. The automatic transmission according to at least one of claims 12-14, wherein the output shaft (3) is provided between the two input shafts (6, 15); the friction clutch (32) is provided on one end of one of the two input shafts (6, 15); and drive force is transmitted by the other input shaft and a gear set.

16. The automatic transmission according to at least one of claims 12-15, wherein the output shaft (3) is provided between the two input shafts (6, 15); drive force is transmitted to one of the two input shafts (6, 15) by a gear set; and drive force is transmitted to the other input shaft by a third shaft (9) and a gear set.
